# EUROPÄISCHE PATENTSCHRIFT

(11) **EP 0 732 567 B1**
(45) Veröffentlichungstag und Bekanntmachung des Hinweises auf die Patenterteilung: **28.07.1999**
(21) Anmeldenummer: 96100743.2
(22) Anmeldetag: 19.01.1996
(51) Int. Cl.: G01D 5/249, G01D 3/08

(54) **Positionsmesssystem**
Position measuring system
Appareil de mesure de position

(30) Priorität: 11.03.1995 DE 19508834
(43) Veröffentlichungstag der Anmeldung: 18.09.1996
(73) Patentinhaber: Dr. Johannes Heidenhain GmbH, D-83292 Traunreut (DE)
(72) Erfinder: Bielski, Steffen, Dipl.-Ing., D-84518 Garching/Alz (DE)

(56) Entgegenhaltungen:
- EP-A- 0 154 654
- DE-A- 3 442 247

## Beschreibung

Die Erfindung betrifft ein Positionsmeßsystem gemäß dem Oberbegriff des Anspruches 1.

Aus der DE-29 38 318-C3 ist ein derartiges Positionsmeßsystem bekannt. Zum eindeutigen Anschließen höher auflösender Codegruppen an gröber auflösende Codegruppen ist ein Festwertspeicher vorgesehen. Am Eingang des Festwertspeichers liegen die digitalisierten Abtastsignale an. Am Ausgang des Festwertspeichers steht ein die Absolutposition bestimmendes Codewort zur Weiterverarbeitung in einer numerischen Steuerung zur Verfügung.

Aus der DE-37 34 938-C2 ist ein Winkelmeßsystem bekannt, bei dem die Winkellage einer Welle über mehrere Umdrehungen mittels eines mehrstufigen Winkelcodierers bestimmt wird. Aus den analogen Abtastsignalen jeder Codescheibe wird ein digitales Codewort gebildet. Zur Synchronisation dieser Codewörter ist eine Auswerteeinheit vorgesehen, so daß am Ausgang des Winkelcodierers ein die Absolutposition bestimmendes Codewort zur direkten Weiterverarbeitung an einer numerischen Steuerung ansteht.

Weiterhin ist in der EP-0 369 031-B1 ein absolutes Positionsmeßsystem beschrieben, bei dem aus den analogen Abtastsignalen mehrere Codewörter gebildet werden, und daraus durch Synchronisation der Codewörter ein die Absolutposition definierendes Codewort gebildet wird.

Bei diesen Positionsmeßsystemen erfolgt somit die gesamte Auswertung der analogen Abtastsignale innerhalb des Positionsmeßsystems. Eine fehlerhafte Synchronisation der Abtastsignale kann von einer angeschlossenen Folgeelektronik (numerische Steuerung) nicht erkannt werden.

Aufgabe der Erfindung ist es, eine flexibel einsetzbare Positionsmeßeinrichtung anzugeben, bei der insbesondere Fehlfunktionen der Positionsmeßeinrichtung von einer angeschlossenen externen Einrichtung erkannt werden können.

Diese Aufgabe wird durch die Merkmale des Anspruches 1 gelöst.

Vorteilhafte Ausgestaltungen der Erfindung sind in den abhängigen Ansprüchen angegeben.

Mit Hilfe der Zeichnungen werden Einzelheiten und Vorteile der Erfindung näher erläutert.

Es zeigt
- Figur 1: eine Winkelmeßeinrichtung gemäß der Erfindung im Prinzip,
- Figur 2: eine weitere erfindungsgemäße Winkelmeßeinrichtung,
- Figur 3: ein Signaldiagramm,
- Figur 4: ein weiteres Signaldiagramm und
- Figur 5: eine Anschlußlogik.

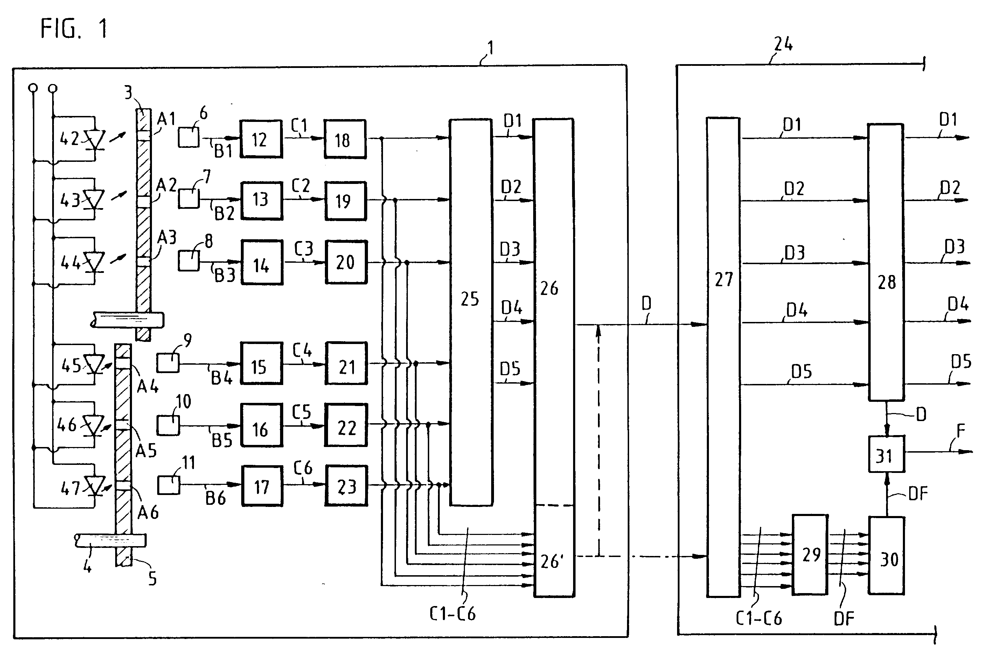

Die Winkelmeßeinrichtung 1 gemäß Figur 1 besteht aus einer Eingangswelle 2, an der eine erste Codescheibe 3 mit drei Codespuren A1, A2, A3 angebracht ist, die in bekannter Weise lichtelektrisch abgetastet wird, um die Absolutposition der Eingangswelle 2 innerhalb einer Umdrehung zu bestimmen.

Die Eingangswelle 2 ist über ein nicht gezeigtes Untersetzungsgetriebe mit einer weiteren Welle 4 mit einer zweiten Codescheibe 5 gekoppelt. Diese Codescheibe 5 besitzt ebenfalls drei Codespuren A4, A5, A6, die ebenfalls lichtelektrisch abgetastet werden. Die Codierung erfolgt vorzugweise im Gray-Code. Alle Codespuren A1 bis A3 der ersten Codescheibe 3 bilden eine erste Codegruppe und alle Codespuren A4 bis A6 der zweiten Codescheibe 5 eine weitere Codegruppe, wobei die erste Codegruppe eine höhere Auflösung als die zweite Codegruppe aufweist.

Zur Abtastung der Codespuren A1 bis A6 sind Fotodetektoren 6 bis 11 vorgesehen, an dessen Ausgang analoge Abtastsignale B1 bis B6 anstehen.

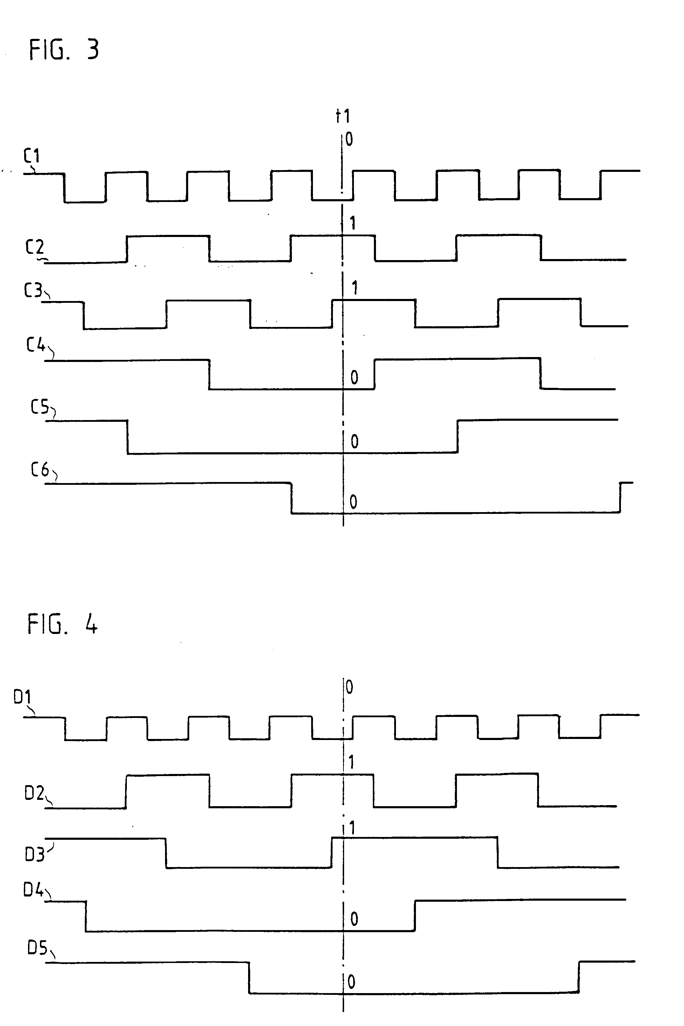

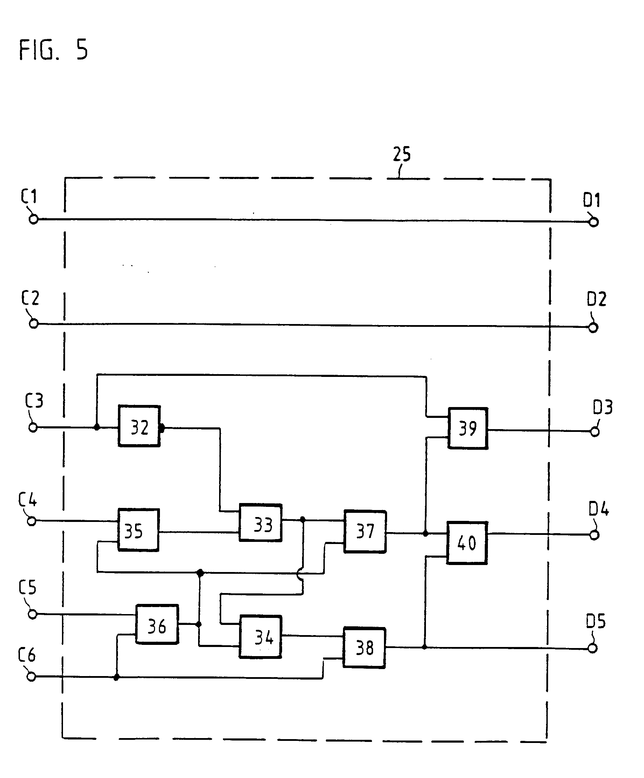

Zur Triggerung dieser Abtastsignale B1 bis B6 sind A/D-Wandler 12 bis 17 in der Winkelmeßeinrichtung 1 angeordnet, an dessen Ausgang die in Figur 3 dargestellten digitalen Abtastsignale C1 bis C6 anstehen. Zur Speicherung dieser digitalen Abtastsignale C1 bis C6 sind Speicherbausteine 18 bis 23 vorgesehen. Die digitalen Abtastsignale C1 bis C6 werden auf Anforderung einer Folgeelektronik 24 zum Zeitpunkt t1 abgespeichert und parallel einer Anschlußlogik 25 zugeführt. Der Aufbau einer derartigen Anschlußlogik 25 ist in Figur 5 dargestellt und wird später näher erläutert.

Aus den sechs digitalen Abtastsignalen C1 bis C6 wird durch Synchronisation in der Anschlußlogik 25 ein Codewort D, bestehend aus fünf Bits gebildet. Die Signale D1 bis D5, welche dieses Codewort D definieren, sind in Figur 4 dargestellt. Dieses Codewort D definiert direkt die absolute Position der Eingangswelle 2 über mehrere Umdrehungen im Gray-Code und wird seriell zur Folgeelektronik 24 übertragen. Zur Parallel-Seriell-Wandlung ist ein Schieberegister 26 vorgesehen. Die Folgeelektronik 24 ist beispielsweise eine NC-Steuerung, welche in Abhängigkeit des die Absolutposition definierenden Codewortes D Bewegungsvorgänge steuert.

Gemäß der Erfindung ist die Winkelmeßeinrichtung 1 dazu ausgebildet, außer dem Codewort D auch die abgespeicherten digitalen Abtastsignale C1 bis C6 zur Folgeelektronik 24 zu übertragen. Die digitalen Abtastsignale C1 bis C6 werden bei Umgehung der Anschlußlogik 25 ebenfalls dem Schieberegister 26 als Schnittstellenbaustein zugeführt und seriell übertragen. Wie in Figur 1 gestrichelt dargestellt ist, kann zur Übertragung auch ein zusätzliches Schieberegister 26' dienen, wobei die Übertragung zur Folgeelektronik 24 seriell auf der selben Leitung wie das Codewort D erfolgt, oder mit mehr Leitungsaufwand parallel (strichpunktiert dargestellt) auf eigenen Leitungen.

Wie aus Figur 1 ersichtlich, wird das Codewort D in der Folgeelektronik 24 mittels des Wandlers 27 seriell-parallel gewandelt und einem Speicherbaustein 28 zugeführt. Ebenso werden die digitalen Abtastsignale C1 bis C6 mittels des Wandlers 27 ebenfalls seriell-parallel gewandelt und einer Anschlußlogik 29 zugeführt. Diese Anschlußlogik 29 hat die gleiche Funktion wie die in der Winkelmeßeinrichtung 1 integrierte Anschlußlogik 25. Besonders vorteilhaft ist es, wenn die Anschlußlogik 29 in der Folgeelektronik 24 softwaremäßig realisiert ist. Die Anschlußlogik 29 synchronisiert die digitalen Abtastsignale C1 bis C6 und bildet das Codewort DF, welches einem Speicherbaustein 30 zugeführt wird. Das Codewort D und das Codewort DF werden einem Vergleicher 31 zugeführt. Der Vergleicher 31 prüft beide Codewörter D, DF auf Gleichheit. Wird festgestellt, daß sich die Codewörter D, DF unterscheiden, wird ein Fehlersignal F abgegeben, das der Folgeelektronik 24 eine Fehlfunktion der Winkelmeßeinrichtung 1, insbesondere der Anschlußlogik 25 signalisiert.

Werden zur Übertragung von der Winkelmeßeinrichtung 1 zur Folgeelektronik 24 zwei separate Schnittstellenbausteine 26 und 26' verwendet, so ist von der Folgeelektronik 24 auch eine Fehlfunktion der Schnittstellenbausteine 26, 26' erkennbar.

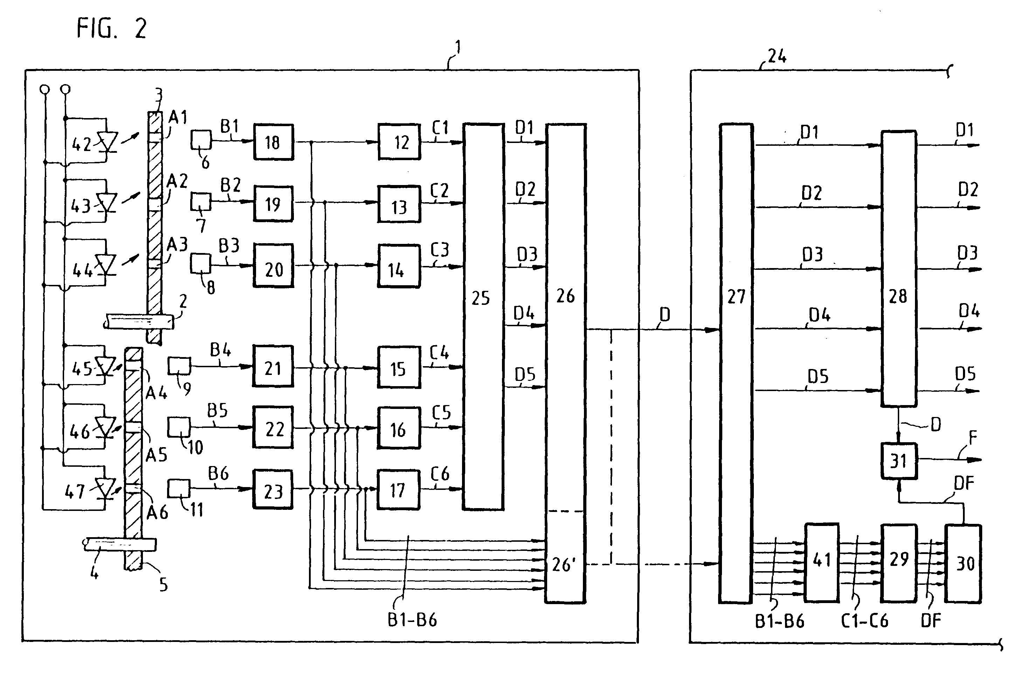

In Figur 5 ist ein Beispiel der Anschlußlogik 25 dargestellt. Die digitalen Abtastsignale C1 bis C3 der höher auflösenden Codegruppe werden in dieser Anschlußlogik 25 mit den digitalen Abtastsignalen C4 bis C6 der gröber auflösenden Codegruppe logisch verknüpft. Durch diese Verknüpfung geht im dargestellten Beispiel ein Bit verloren, so daß am Eingang sechs Bits und am Ausgang fünf Bits zur Verfügung stehen. Die dargestellte Verknüpfung ist an sich bekannt und soll nur kurz erläutert werden. Es ist aus Figur 3 ersichtlich, daß die ersten zwei höchstauflösenden Abtastsignale C1 und C2 einen Gray-Code bilden und das dritte Abtastsignal C3 gegenüber dem zweiten um 90° phasenverschoben ist, aber die gleiche Signalperiode wie das Abtastsignal C2 aufweist. Dieses Abtastsignal C3 dient zur Synchronisation, also zum korrekten Anschluß der Abtastsignale C1 bis C3 und C4 bis C6 beider Codegruppen. Die Codespur A3, welche zur Bildung des Abtastsignales C3 dient, wird deshalb auch als Anschlußspur bezeichnet. Bei einem Getriebespiel des Untersetzungsgetriebes verschieben sich die Flanken der Abtastsignale C4 bis C6 gegenüber der dargestellten Soll-Lage. Um ein unvermeidliches Getriebespiel zuzulassen, werden aus dem am gröbsten auflösenden Abtastsignal C3 der höher auflösenden Codegruppe und den Abtastsignalen C4 bis C6 der gröber auflösenden Codegruppen Abtastsignale D3, D4, D5 erzeugt, die mit den Abtastsignalen D1 und D2 einen korrekten Gray-Code bilden. Wie in der DE-37 34 938-C2 in Figur 2 anschaulich erläutert ist, ist eine korrekte Synchronisation gewährleistet, wenn das Getriebespiel innerhalb einer halben Signalperiode des am gröbsten auflösenden Abtastsignales C3 der höher auflösenden Codegruppe liegt.

Die beispielsweise dargestellte Anschlußlogik 25 besteht aus dem Inverter 32, den UND-Gliedern 33, 34 sowie den EXOR-Gliedern 35 bis 40.

In nicht gezeigter Weise können die Speicherbausteine 18 bis 23 auch vor den A/D-Wandlern 12 bis 17 zur Speicherung der analogen Abtastsignale B1 bis B6 angeordnet sein.

Eine weitere Möglichkeit zur Realisierung der Erfindung besteht darin, anstelle der digitalen Abtastsignale C1 bis C6 die analogen Abtastsignale B1 bis B6 - insbesonders seriell - zur Folgeelektronik 24 zu übertragen. Dieses Beispiel ist in Figur 2 dargestellt. Gleiche Bauteile wurden in Figur 1 und Figur 2 mit gleichen Bezugszeichen versehen. Der wesentliche Unterschied zu Figur 1 besteht darin, daß außer dem durch die Anschlußlogik 25 gebildeten Datenwort D der Folgeelektronik 24 alle analogen Abtastsignale B1 bis B6 zur Verfügung stehen. Diese analogen Abtastsignale B1 bis B6 werden A/D-Wandlern 41 zur Bildung von digitalen Abtastsignalen C1 bis C6 zugeführt. Wie zu Figur 1 beschrieben, werden dann diese digitalen Abtastsignale C1 bis C6 in einer Anschlußlogik 29 zu dem Datenwort DF in der Folgeelektronik 24, also außerhalb der Winkelmeßeinrichtung miteinander verglichen.

In den dargestellten Beispielen wird aus jedem analogen Abtastsignal B1 bis B6 ein digitales Abtastsignal C1 bis C6 in Form eines einzigen Bits abgeleitet. Wie in der EP-0 369 031-B1 sowie der EP-0 575 843-A1 beschrieben, können die Codespuren aber auch derart ausgebildet sein, daß aus einer Codespur bereits ein mehrstelliges Datenwort erzeugt wird, wobei aus mehreren Datenwörtern die Absolutposition bestimmt wird. Die einzelnen Bits der Datenwörter werden gemäß der Erfindung wie die Bits der digitalen Abtastsignale C1 bis C6 behandelt, wobei jedes Datenwort als Codegruppe bezeichnet werden kann.

Die Funktion der Anschlußlogik 25 sowie 29 kann in Hard- oder Software realisiert sein und ist nicht auf das dargestellte Beispiel beschränkt.

Mit der Erfindung ist es auch möglich, die einzelnen analogen Abtastsignale B1 bis B6 individuell durch Beaufschlagen mit Hilfsspannungen oder Regeln der zugeordneten Lichtquellen 42 bis 47 auf definierte Pegel zu verschieben oder die Triggerpegel der A/D-Wandler 12 bis 17 und/oder der A/D-Wandler 41 definiert zu verschieben. Durch diese Maßnahme können alle im Betrieb vorkommenden Signalkombinationen simuliert werden und bei allen Signalkombinationen die Anschlußlogik wie vorstehend erläutert ist, überprüft werden.

Die Steuerung der seriellen Übertragung der Abtastsignale D1 bis D5 sowie C1 bis C6 oder B1 bis B6 erfolgt über die dargestellte serielle Schnittstelle von der NC-Steuerung ausgehend. Die Schnittstelle ist daher als bidirektionale Schnittstelle ausgeführt.

Das übertragene Datenwort D definiert die Absolutposition im Gray-Code, es ist aber auch möglich, das Gray-Code-Datenwort D vor der Übertragung in einen Binär-Code zu wandeln.

Die zu synchronisierenden Codegruppen können auch auf einer einzigen Maßverkörperung aufgebracht sein. Dies kann erforderlich sind, da sich die Flanken eines Abtastsignales allein durch frequenzabhängige Einflüsse relativ gegenüber einem weiteren Abtastsignal verschieben können. Diese Verschiebung erfolgt beispielsweise allein durch die Triggerung aufgrund der Frequenzabhängigkeit der Triggerstufen.

Die Erfindung ist bei Winkel- sowie Linearmeßeinrichtungen einsetzbar, die auf dem lichtelektrischen, kapazitiven, induktiven oder magnetischen Abtastprinzip beruhen.

## Patentansprüche

1. Positionsmeßsystem zur Erfassung der Absolutposition zweier relativ zueinander beweglicher Teile mit einer am ersten Teil vorgesehenen Abtasteinheit (6 bis 11, 42 bis 47) zum Abtasten mehrerer am anderen Teil vorgesehener Codespuren (A1 bis A6) unterschiedlicher Auflösung, so daß mehrere analoge und/oder digitale Abtastsignale (B1 bis B6, C1 bis C6) mit unterschiedlichen Signalperioden gewonnen werden, die einer Anschlußlogik (25) zur Kombination mehrerer dieser Abtastsignale (B1 bis B6, C1 bis C6) zugeführt werden und von der Anschlußlogik (25) ein Datenwort (D) gebildet wird, das die Absolutposition definiert, und daß dieses Datenwort (D) an zumindest einer Leitung am Ausgang des Positionsmeßsystems (1) ansteht, dadurch gekennzeichnet, daß zusätzlich die analogen oder digitalen Abtastsignale (B1 bis B6, C1 bis C6) unter Umgehung der Anschlußlogik (25) auf die genannte Leitung oder auf weitere Leitungen am Ausgang des Positionsmeßsystems (1) legbar sind, so daß einer Folgeelektronik (24) wahlweise die Abtastsignale (B1 bis B6, C1 bis C6) und/oder das von der Anschlußlogik (25) gebildete Codewort (D) zuführbar ist.

2. Positionsmeßsystem nach Anspruch 1, dadurch gekennzeichnet, daß in der Folgeelektronik (24) eine weitere Anschlußlogik (25) mit der gleichen Funktion der Anschlußlogik (25) des Positionsmeßsystems (1) vorgesehen ist, und daß die zur Folgeelektronik (24) übertragenen digitalen Abtastsignale (C1 bis C6) oder die digitalisierten analogen Abtastsignale (B1 bis B6) dieser Anschlußlogik (29) zugeführt werden und ein weiteres Datenwort (DF) gebildet wird.

3. Positionsmeßsystem nach Anspruch 2, dadurch gekennzeichnet, daß das übertragene Datenwort (D) mit dem in der Folgeelektronik (24) gebildeten Datenwort (DF) verglichen wird, und daß ein Fehlersignal (F) abgegeben wird, wenn keine Übereinstimmung der Datenwörter (D, DF) festgestellt wird.

4. Positionsmeßsystem nach einem der Ansprüche 1 bis 3, dadurch gekennzeichnet, daß die digitalen oder analogen Abtastsignale (B1 bis B6, C1 bis C6) in dem Positionsmeßsystem (1) abgespeichert werden und nach einem Anforderungssignal der Folgeelektronik (24) die abgespeicherten Abtastsignale (B1 bis B6, C1 bis C6) und das Codewort (D) seriell zur Folgeelektronik (24) übertragen werden.

5. Positionsmeßsystem nach einem der Ansprüche 1 bis 4, dadurch gekennzeichnet, daß das Positionsmeßsystem eine Winkelmeßeinrichtung (1) mit mehreren über Untersetzungsgetriebe miteinander verbundenen Codescheiben (3, 5) ist, und daß in der Anschlußlogik (25, 29) digitale Abtastsignale (C4, C5, C6) gröber auflösender Codespuren (A4, A5, A6) zumindest mit einem Abtastsignal (C3) einer höher auflösenden Codespur (A3) kombiniert werden.

6. Positionsmeßsystem nach einem der Ansprüche 1 bis 5, dadurch gekennzeichnet, daß eine Einrichtung vorgesehen ist, mit der die Pegel der analogen Abtastsignale definiert veränderbar sind, wodurch verschiedene Absolutpositionen simuliert werden.

7. Positionsmeßsystem nach einem der Ansprüche 1 bis 5, dadurch gekennzeichnet, daß eine Einrichtung vorgesehen ist, mit der die Triggerpegel zur Analog/Digital-Wandlung der analogen Abtastsignale definierbar veränderbar sind, wodurch verschiedene Absolutpositionen simuliert werden.

8. Positionsmeßsystem nach Anspruch 6 oder 7, dadurch gekennzeichnet, daß bei jeder Verschiebung zumindest eines Pegels die Datenwörter (D, DF) in der Folgeelektronik (24) miteinander verglichen werden

9. Positionsmeßsystem nach einem der Ansprüche 1 bis 8, dadurch gekennzeichnet, daß die Folgeelektronik eine NC-Steuerung (24) ist.

## Claims

1. Position measuring system for detecting the absolute position of two parts, which move relative to one another, with a scanning unit (6 to 11, 42 to 47) provided on the first part for scanning several code tracks (A1 to A6) which are provided on the other part and which have a different resolution so that several analogue and/or digital scanning signals (B1 to B6, C1 to C6) with different signal periods are obtained which are conveyed to a terminal logic (25) for combining several of these scanning signals (B1 to B6, C1 to C6) and from the terminal logic (25) a data element (D) is formed which defines the absolute position and so that this data element (D) is fixed on at least one line at the outlet of the position measuring system (1),
characterised in that
in addition the analogue or digital scanning signals (B1 to B6, C1 to C6), by-passing the terminal logic (25) can be connected to the mentioned line or to further lines at the outlet of the position measuring system (1) so that when desired the scanning signals (B1 to B6, C1 to C6) and/or the code element (D) formed by the terminal logic (25) can be supplied to a sequential electronic unit (24).

2. Position measuring system according to claim 1,
characterised in that
in the sequential electronic unit (24) a further terminal logic (25) with the same function of the terminal logic (25) of the position measuring system (1) is provided,
and in that the digital scanning signals (C1 to C6) which are transmitted to the sequential electronic unit (24), or the digitalised analogue scanning signals (B1 to B6) are supplied to this terminal logic (29) and a further data element (DF) is formed.

3. Position measuring system according to claim 2,
characterised in that
the transmitted data element (D) is compared with the data element (DF) which is formed in the sequential electronic unit (24) and
in that an error signal (F) is emitted if no match between the data elements (D, DF) is established.

4. Position measuring system according to one of the claims 1 to 3 characterised in that
the digital or analogue scanning signals (B1 to B6, C1 to C6) are stored in the position measuring system (1) and after a demand signal from the sequential electronic unit (24) the stored scanning signals (B1 to B6, C1 to C6) and the code element (D) are transmitted in series to the sequential electronic unit (24).

5. Position measuring system according to one of the claims 1 to 4, characterised in that
the position measuring system is an angle measuring device (1) with several code slices (3, 5) which are connected to one another via a step-down gear and
in that in the terminal logic (25, 29) digital scanning signals (C4, C5, C6) of fairly roughly resolving code tracks (A4, A5, A6,) are combined at least with one scanning signal (C3) of a more highly resolving code track (A3).

6. Position measuring system according to one of the claims 1 to 5, characterised in that
a device is provided with which the levels of the analogue scanning signals are changeable in a defined manner as a result of which various absclute positions are simulated.

7. Position measuring system according to one of the claims 1 to 5, characterised in that
a device is provided with which the trigger levels for the analogue/digital switch-over of the analogue scanning signals are changeable in a definable manner, as a result of which various absolute positions are simulated.

8. Position measuring system according to claim 6 or 7, characterised in that
upon each displacement of at least one level the data elements (D, DF) are compared with one another in the sequential electronic unit (24).

9. Position measuring system according to one of the claims 1 to 8, characterised in that
the sequential electronic unit is a NC-control unit (24).

## Revendications

1. Dispositif de mesure de position pour déterminer la position absolue de deux éléments mobiles l'un par rapport, comprenant une unité de palpage (6 à 11, 42 à 47) prévue sur le premier élément pour palper plusieurs pistes de codes (A1 à A6) avec des résolutions différentes prévues sur l'autre élément, tel que des signaux de palpage (B1 à B6, C1 à C6) analogiques et/ou numériques avec des périodes de signal différentes, qui sont transmis à une logique de combinaison (25) pour combiner plusieurs de ces signaux de palpage (B1 à B6, C1 à C6) sont produits, qu'une donnée élémentaire (D) qui définit la position absolue est formée par la logique de combinaison (25) et que la donnée élémentaire (D) est transmise à au moins une ligne à la sortie du dispositif de mesure de position, caractérisé par le fait que les signaux de palpage analogiques ou numériques (B1 à B6, C1 à C6) peuvent être appliqués en plus à ladite ligne ou à d'autres lignes à la sortie du système de mesure de position (1) en contournant la logique de combinaison (25), de sorte que les signaux de palpage (B1 à B6, C1 à C6) et/ou le code élémentaire (D) formé par la logique de combinaison (25) peuvent être envoyés de manière sélective à une électronique séquentielle (24).

2. Dispositif de mesure de position selon la revendication 1, caractérisé par le fait qu'une logique de combinaison (29) supplémentaire ayant la même fonction que la logique de combinaison (25) du système de mesure de position (1) est prévue dans l'électronique séquentielle (24), que les signaux de palpage (C1 à C6) numériques transmis à l'électronique séquentielle (24) ou les signaux de palpage analogiques (B1 à B6) numérisés sont appliqués à la logique de combinaison (29) et qu'une donnée élémentaire (DF) supplémentaire est formée.

3. Dispositif de mesure de position selon la revendication 2, caractérisé par le fait que la donnée élémentaire (D) transmise est comparée à la donnée élémentaire (DF) formée dans l'électronique séquentielle (24) et qu'un signal d'erreur (F) est délivré lorsqu'aucune concordance entre les données élémentaires (D, DF) n'est constatée.

4. Dispositif de mesure de position selon une des revendications 1 à 3, caractérisé par le fait que les signaux de palpage numériques ou analogiques (B1 à B6, C1 à C6) sont mémorisés dans le système de mesure de position et après un signal d'appel de l'électronique séquentielle (24) les signaux de palpage (B1 à B6, C1 à C6) mémorisés et la donnée élémentaire (D) sont transmis en mode série à l'électronique séquentielle (24).

5. Dispositif de mesure de position selon une des revendications 1 à 4, caractérisé par le fait que le dispositif de mesure de position est un dispositif de mesure d'angles (1) avec plusieurs disques codeurs (3, 5) liés les uns aux autres par l'intermédiaire d'engrenages réducteurs et que dans la logique de combinaison (25, 29) des signaux de palpage numériques (C4, C5, C6) de pistes de codes avec une résolution grossière (A4, A5, A6) sont combinés à au moins un signal de palpage (C3) d'une piste de codes (A3) avec une résolution plus fine.

6. Dispositif de mesure de position selon une des revendications 1 à 5, caractérisé par le fait qu'il est prévu un dispositif à l'aide duquel on peut faire varier de manière définie les niveaux des signaux de palpage analogiques, ce qui permet de simuler différentes positions absolues.

7. Dispositif de mesure de position selon une des revendications 1 à 5, caractérisé par le fait qu'il est prévu un dispositif à l'aide duquel on peut faire varier de manière définie les niveaux de déclenchement pour la conversion analogique/numérique, ce qui permet de simuler différentes positions absolues.

8. Dispositif de mesure de position selon une des revendications 6 ou 7, caractérisé par le fait qu'à chaque décalage d'au moins un niveau, on compare entre elles les données élémentaires (D, DF) dans l'électronique séquentielle (24).

9. Dispositif de mesure de position selon une des revendications 1 à 8, caractérisé par le fait que l'électronique séquentielle est une commande de machine à commande numérique (24).
